(19)

Europäisches Patentamt

European Patent Office

Office européen des brevets

(11) **EP 3 978 654 A1**

(12) **EUROPEAN PATENT APPLICATION**

(43) Date of publication:
06.04.2022 Bulletin 2022/14

(21) Application number: 21194955.7

(22) Date of filing: 06.09.2021

(51) International Patent Classification (IPC):
*C25D 1/04* *(2006.01)*    *C25D 3/38* *(2006.01)*
*C25D 21/06* *(2006.01)*    *C25D 21/16* *(2006.01)*
*H01M 4/00* *(2006.01)*

(52) Cooperative Patent Classification (CPC):
**C25D 1/04; C25D 3/38; C25D 21/06; C25D 21/16; H01M 4/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 KR 20200127234**

(71) Applicant: **SK Nexilis Co., Ltd.**
**Jeollabuk-do 56137 (KR)**

(72) Inventors:
• **KIM, Young Tae**
 **Jeongeup-si, Jeollabuk-do (KR)**
• **JUN, Sang Hyun**
 **Jeongeup-si, Jeollabuk-do (KR)**
• **JIN, Shan Hua**
 **Jeongeup-si, Jeollabuk-do (KR)**
• **LEE, An Na**
 **Jeongeup-si, Jeollabuk-do (KR)**

(74) Representative: **Ter Meer Steinmeister & Partner**
**Patentanwälte mbB**
**Nymphenburger Straße 4**
**80335 München (DE)**

(54) **ELECTROLYTIC COPPER FOIL OF HIGH STRENGTH, ELECTRODE COMPRISING THE SAME, SECONDARY BATTERY COMPRISING THE SAME, AND METHOD OF MANUFACTURING THE SAME**

(57) Disclosed herein is an electrolytic copper foil including a copper layer, wherein the copper layer includes a (220) surface, and an orientation index M(220) of the (220) surface is one or more.

**EP 3 978 654 A1**

**Description**

CROSS-REFERENCE TO RELATED APPLICATIONS

This application claims the benefit of the Korean Patent Applications No. 10-2020-0127234 filed on September 29, 2020, which are hereby incorporated by reference as if fully set forth herein.

BACKGROUND

Field of the Invention

The present disclosure relates to an electrolytic copper foil which is easily treated in a manufacturing process and is for improving a capacity retention rate of a secondary battery, an electrode including the same, a secondary battery including the same, and a method of manufacturing the same.

Discussion of the Related Art

Secondary batteries are types of energy conversion devices which convert electrical energy into chemical energy, store the chemical energy therein, and then convert the chemical energy back to the electrical energy when electricity is needed, thereby generating electricity. The secondary batteries are used as energy sources for electric vehicles as well as portable home appliances such as mobile phones and laptops.

The secondary batteries having economic and environmental advantages over disposable primary batteries include lead-acid batteries, nickel-cadmium secondary batteries, nickel-hydrogen secondary batteries, and lithium secondary batteries.

Among the above secondary batteries, the lithium secondary batteries have high operating voltages, high energy densities, and excellent lifetime characteristics. Therefore, in the field of information and communication devices where portability and mobility are important, the lithium secondary batteries are preferred, and their application range is also expanding to energy storage devices for hybrid vehicles and electric vehicles.

A secondary battery includes an anode current collector made of copper foil. Among copper foils, an electrolytic copper foil is widely used as the anode current collector of the secondary battery. In addition to an increase of the demand for the secondary batteries, as the demand for high-capacity, high-efficiency, and high-quality secondary batteries increases, copper foil capable of improving the characteristics of secondary batteries is required. In particular, copper foil capable of securing a high capacity and stable capacity retention of the secondary battery is required.

Meanwhile, as a thickness of the copper foil becomes thinner, an amount of an active material that is includable in the same space increases and the number of current collectors can be increased so that a capacity of the secondary battery can be increased. However, as the thickness of the copper foil becomes thinner, since defects such as tears or creases occur in a copper foil manufacturing process and a battery manufacturing process, it is difficult to manufacture copper foil in the form of a very thin film.

In addition, even when the secondary battery has a sufficiently high charging/discharging capacity, when the charging/discharging capacity of the secondary battery is drastically decreased as a charging/discharging cycle is repeated (that is, when a capacity retention rate is low or a lifetime is short), the secondary battery should be replaced frequently, and thus money and resources are wasted economically and environmentally. Damage to the copper foil is one of causes of a decrease in the capacity retention rate of the secondary battery. As the charging/discharging cycle of the secondary battery is repeated, the anode current collector contracts/expands, and in this case, the copper foil may be sheared.

SUMMARY

Accordingly, an objective of the present disclosure is to provide an electrolytic copper foil having high strength and a high stretch ratio even in a thin thickness.

According to one aspect of the present disclosure, there is provided an electrolytic copper foil which is easily handled in a process of manufacturing copper foil and a battery and is capable of improving a capacity retention rate of a secondary battery.

According to another aspect of the present disclosure, there is provided an electrode capable of improving the capacity retention rate of the secondary battery.

According to still another aspect of the present disclosure, there is provided a secondary battery capable of improving a capacity retention rate thereof.

According to yet another aspect of the present disclosure, there is provided a method of manufacturing an electrolytic copper foil capable of improving the capacity retention rate of the secondary battery.

In addition to the above-described aspects of the present disclosure, other features and advantages of the present disclosure will be described below or will be clearly understood by those skilled in the art from the description.

An electrolytic copper foil includes a copper layer, wherein the copper layer includes a (220) surface, and an orientation index M(220) of the (220) surface is one or more, the orientation index M(220) of the (220) surface is obtained by Equation 1 below:

[Equation 1]

$$M(220) = IR(220)/IFR(220),$$

in Equation 1, IR 220 and IFR 220 are obtained by Equations 2 and 3 below:

[Equation 2]

$$IR(220) = \frac{I(220)}{\sum I(hkl)},$$

[Equation 3]

$$IFR(220) = \frac{IF(220)}{\sum IF(hkl)},$$

in Equation 2, I(hkl) denotes an X-ray diffraction (XRD) intensity of each crystal surface (hkl) of the electrolytic copper foil, and in Equation 3, IF(hkl) denotes the XRD intensity of each crystal surface (hkl) of Joint Committee on Powder Diffraction Standards (JCPDS) card.

The electrolytic copper foil may have a stretch ratio ranging from 2% to 15% at room temperature.

The electrolytic copper foil may have tensile strength ranging from 41.0 kgf/mm$^2$ to 75.0 kgf/mm$^2$ at room temperature.

After heat treatment at a temperature of 190 °C for sixty minutes, the electrolytic copper foil may have tensile strength ranging from 40.0 kgf/mm$^2$ to 65.0 kgf/mm$^2$.

In the electrolytic copper foil, the tensile strength after the heat treatment at the temperature of 190 °C for sixty minutes with respect to the tensile strength at room temperature may be 0.950 or more.

The electrolytic copper foil may have a thickness ranging from 2.0 μm to 18.0 μm.

The electrolytic copper foil may further include a protective layer disposed on the copper layer, and an anti-corrosive membrane may include at least one among chromium, a silane compound, and a nitrogen compound.

An electrode for a secondary battery may include an electrolytic copper foil and an active material layer disposed on at least one surface of the electrolytic copper foil, wherein the electrolytic copper foil may include any one of the above electrolytic copper foils.

A secondary battery includes a cathode, an anode made of the electrode for a secondary battery, an electrolyte configured to provide an environment through which lithium ions move between the cathode and the anode, and a separator configured to electrically insulate the cathode from the anode.

A method of manufacturing an electrolytic copper foil includes preparing an electrolyte including copper ions and an organic additive and forming a copper layer by electrically connecting a cathode plate and a rotating anode drum, which are disposed to be spaced apart from each other in the electrolyte, at a current density and further includes purifying the organic additive using at least one among carbon filtration, diatomaceous earth filtration, and ozone treatment, wherein the preparing of the electrolyte includes heat-treating a copper wire, acid-cleaning the heat-treated copper wire, water-cleaning the acid-cleaned copper wire, and putting the water-cleaned copper wire into sulfuric acid for the electrolyte, the electrolyte further includes 80 to 120 g/L of copper ions, 80 to 150 g/L of sulfuric acid, and 0.01 to 1.5 ppm chloride ions (Cl$^-$), the organic additive includes a crystalline regulator, and the crystalline regulator includes an organic compound containing an amino group (-NR$_2$), a carboxyl group (-COOH), and a thiol group (-SH).

The carbon filtration may use at least one of granular carbon and fragmented carbon.

The crystalline regulator may include at least one selected from collagen, gelatin, and a decomposition material of the collagen and the gelatin.

The crystalline regulator may have a concentration ranging from 0.5 ppm to 15.0 ppm.

The electrolyte may have a concentration of total organic carbon (TOC) at 50 ppm or less.

The method of manufacturing an electrolytic copper foil may further include forming a protective layer on the copper layer using an anti-corrosive liquid, and an anti-corrosive liquid may include at least one among chromium, a silane compound, and a nitrogen compound.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 is a schematic cross-sectional view illustrating an electrolytic copper foil according to one embodiment of the present disclosure;

FIG. 2 is a diagram illustrating an example of an X-ray diffraction (XRD) graph of the electrolytic copper foil;

FIG. 3 is a schematic cross-sectional view illustrating an electrolytic copper foil according to another embodiment of the present disclosure;

FIG. 4 is a schematic cross-sectional view illustrating an electrolytic copper foil according to still another embodiment of the present disclosure;

FIG. 5 is a schematic cross-sectional view illustrating an electrode for a secondary battery according to yet another embodiment of the present disclosure;

FIG. 6 is a schematic cross-sectional view illustrating an electrode for a secondary battery according to yet another embodiment of the present disclosure;

FIG. 7 is a schematic cross-sectional view illustrating a secondary battery according to yet another embodiment of the present disclosure;

FIG. 8 is a photograph capturing the granular carbon;

FIG. 9 is a photograph capturing the fragmented carbon;

FIG. 10 is a diagram illustrating a cross-section of the electrolytic copper foil at room temperature, which is captured by an electron back scatter diffraction (EBSD), according to Example 1 of the present disclosure;

FIG. 11 is a diagram illustrating a cross-section of an electrolytic copper foil, which is captured by the EBSD, after heat treatment at a temperature of 190 °C for one hour according to Example 1 of the present disclosure;

FIG. 12 is a diagram illustrating a cross-section of the electrolytic copper foil at room temperature, which is captured by the EBSD, according to Example 2 of the present disclosure; and

FIG. 13 is a diagram illustrating a cross-section of an electrolytic copper foil, which is captured by the EBSD, after heat treatment at a temperature of 190 °C for one hour according to Example 2 of the present disclosure.

## DETAILED DESCRIPTION OF THE DISCLOSURE

Hereinafter, exemplary embodiments of the present disclosure will be described with reference to the accompanying drawings.

It will be apparent to those skilled in the art that various alternations and modifications of the present disclosure are possible without departing from the spirit and scope of the present disclosure. Accordingly, the present disclosure includes all alternations and modifications within the scope of the disclosure as set forth in the appended claims and their equivalents.

Shapes, sizes, ratios, angles, numbers, and the like disclosed in the drawings for describing the embodiments of the present disclosure are illustrative, and thus the present disclosure is not limited to the illustrated matters. Throughout the present specification, the same components may be referred to by the same reference numerals.

When terms "including," "having," "consisting of," and the like described in the present specification are used, other parts may be added unless a term "only" is used herein. When a component is expressed as the singular form, the plural form is included unless otherwise specified. In addition, in analyzing a component, it is interpreted as including an error range even when there is no explicit description.

In describing a positional relationship, for example, when a positional relationship of two parts is described as being "on," "above," "below, "next to," or the like, unless "immediately" or "directly" is not used, one or more other parts may be located between the two parts.

In describing a temporal relationship, for example, when a temporal predecessor relationship is described as being "after," "subsequent," "next to," "prior to," or the like, unless "immediately" or "directly" is not used, cases that are not continuous may also be included.

In order to describe various components, terms such as "first," "second," and the like are used, but these components are not limited by these terms. These terms are used only to distinguish one component from another component. Therefore, a first component described below may be substantially a second component within the technical spirit of the present disclosure.

The term "at least one" should be understood to include all possible combinations from one or more related items.

Features of various embodiments of the present disclosure may be partially or entirely coupled or combined with each other and may be technically various interlocking and driving, and the embodiments may be independently implemented with respect to each other or implemented together with a correlation.

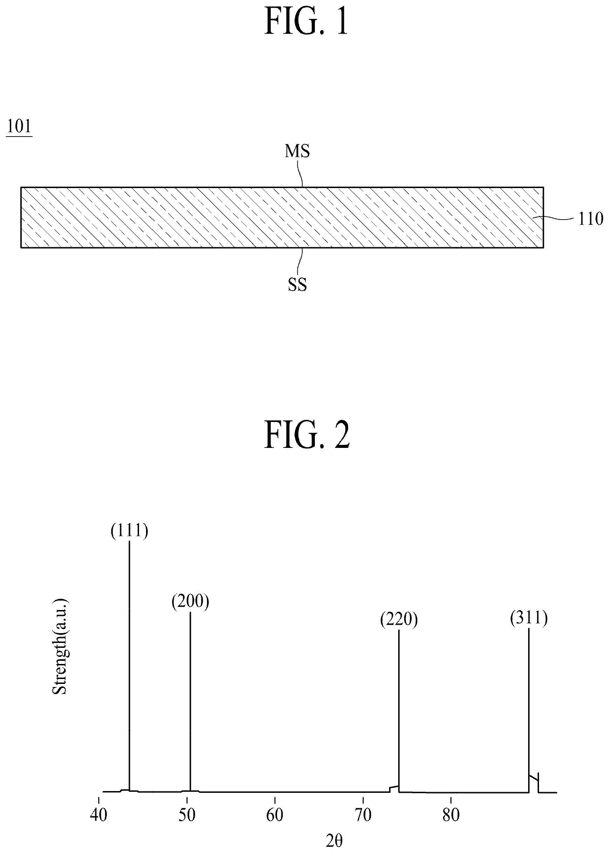

FIG. 1 is a schematic cross-sectional view illustrating an electrolytic copper foil 101 according to one embodiment of the present disclosure.

As shown in FIG. 1, the electrolytic copper foil 101 according to one embodiment of the present disclosure includes a copper layer 110. The copper layer 110 includes a matte surface MS and a shiny surface SS opposite to the matte surface MS.

For example, the copper layer 110 may be formed on a rotating anode drum through electroplating. In this case, the shiny surface SS refers to a surface in contact with the rotating anode drum during the electroplating, and the matte surface MS refers to a surface opposite to the shiny surface SS. In FIG. 1, the matte surface MS refers to an "upper surface" of the electrolytic copper foil 101, and the shiny surface SS refers to a "lower surface" of the electrolytic copper foil 101. However, the "upper surface" and the "lower surface" are described for convenience of description of the present disclosure, and the matte surface MS may become the "lower surface" and the shiny surface SS may become the "upper surface."

According to one embodiment of the present disclosure, the copper layer 110 may have a crystal surface, and the crystal surface of the copper layer 110 may be expressed as an (hkl) surface.

More specifically, the copper layer 110 has a plurality of crystal surfaces, and each of the crystal surfaces may be expressed using a Miller index. The crystal surfaces of the copper layer 110 may include a (111) surface, a (200) surface, a (220) surface, and a (311) surface. Each of the crystal surfaces has a diffraction intensity, and the diffraction intensity of each of the crystal surfaces may be measured or calculated using X-ray diffraction (XRD).

According to one embodiment of the present disclosure, an orientation index M of the (220) surface among the crystal surfaces of the copper layer 110 is one or more. The orientation index M(220) of the (220) surface is obtained by Equation 1 below.

[Equation 1]

$$M(220) = IR(220)/IFR(220)$$

In Equation 1, IR 220 and IFR 220 are obtained by Equations 2 and 3 below, respectively.

[Equation 2]

$$IR(220) = \frac{I(220)}{\sum I(hkl)}$$

[Equation 3]

$$IFR(220) = \frac{IF(220)}{\sum IF(hkl)}$$

In Equation 2, I(hkl) denotes an XRD diffraction intensity of each crystal surface (hkl) of the electrolytic copper foil 101, and I(220) denotes an XRD diffraction intensity of the (220) surface of the electrolytic copper foil 101. In Equation 3, IF(hkl) denotes an XRD diffraction intensity of each crystal surface (hkl) of a standard sample, which is non-oriented with respect to all crystal surfaces specified in Joint Committee on Powder Diffraction Standards (JCPDS), and IF(220) denotes an XRD diffraction intensity of a (220) surface of the standard sample.

Hereinafter, a method of measuring and calculating the orientation index M (220) of the (220) surface among the crystal surfaces of the copper layer 110 constituting the electrolytic copper foil 101 will be described with reference to FIG. 2.

FIG. 2 is a diagram illustrating an example of an XRD graph of the electrolytic copper foil 101. More specifically, FIG. 2 is an XRD graph of the copper layer 110 constituting the electrolytic copper foil 101. Each peak in FIG. 2 corresponds to each crystal surface. The XRD graph of FIG. 2 is merely an example, and the XRD graph of the electrolytic copper foil 101 may be varied according to copper foil, and the present disclosure is not limited thereto.

An orientation index M(hkl) of the crystal surface (hkl) of the copper layer 110 is a value obtained by dividing a relative diffraction intensity IR(hkl) of a specific crystal surface (hkl) with respect to the copper layer 110 by a relative diffraction intensity IFR(hkl) of the specific crystal surface (hkl) obtained from the standard sample, which is non-oriented with respect to all the crystal surfaces.

In order to measure the relative diffraction intensity IR(hkl) of the specific crystal surface (hkl) with respect to the copper layer 110, an XRD graph having a peak corresponding to each crystal surface is obtained first through the XRD within a diffraction angle (2θ) range from 30° to 95° (Target: Copper K alpha 1, 2θ interval: 0.01°, and 2θ scan speed: 1°/min).

Referring to FIG. 2, the XRD graph including four peaks corresponding to a (111) surface, a (200) surface, a (220) surface, and a (311) surface of the copper layer 110 is obtained. Next, the XRD diffraction intensity I(hkl) of each crystal surface (hkl) is calculated from the XRD graph. A value, which is calculated by substituting the XRD diffraction intensity I(hkl) of each crystal surface (hkl) obtained in this way into Equation 2, is a relative diffraction intensity IR(220) of the (220) surface among the specific crystal surfaces with respect to the copper layer 110.

In addition, the relative diffraction intensity IFR(220) of the specific crystal surface (220) obtained from the standard sample which is non-oriented with respect to all the crystal surfaces may be calculated by substituting the XRD diffraction intensity IF(hkl) of the each crystal surface (hkl) of the standard sample, which is non-oriented with respect to all crystal surfaces specified by JCPDS, into Equation 3.

By substituting IR(220) and IFR(220), which are obtained according to Equations 2 and 3, into Equation 1, an orientation index M(220) of the (220) surface among the crystal surfaces of the copper layer 110 may be calculated.

According to one embodiment of the present disclosure, an orientation index M(220) of the (220) surface among the crystal surfaces of the copper layer 110 is one or more. When the orientation index M(220) of the (220) surface is one or more, the copper layer 110 has a preferred orientation parallel to the (220) surface of the copper layer 110, and when the orientation index M(220) of the (220) surface is less than one, the preferred orientation is referred to as being decreased.

When the orientation index M(220) of the (220) surface of the copper layer 110 is less than one, the preferred orientation of the (220) surface of the copper layer 110 is decreased, and thus a crystal structure of the copper layer 110 becomes excessively fine, and a probability of forming a copper layer 110 having tensile strength of 75.0 kgf/mm$^2$ or more at room temperature and ultra-high strength increases, and addition of impurities is also increased. Therefore, an occurrence rate of electrodeposition defects of the electrolytic copper foil 101, for example, pinholes, is increased, and as a result, the tensile strength of the electrolytic copper foil 101 after high-temperature heat treatment is reduced relatively significantly, and a stretch ratio at room temperature is increased, and thus tears or wrinkles may occur in the electrolytic copper foil 101.

According to one embodiment of the present disclosure, the electrolytic copper foil 101 may have a stretch ratio ranging from 2% to 15% at room temperature (25±15 °C).

The stretch ratio of the electrolytic copper foil 101 may be measured by a universal testing machine (UTM) according to a method specified in an IPC-TM-650 test method manual. According to one embodiment of the present disclosure, equipment of Instron® may be used. In this case, a width of a sample for measuring a stretch ratio is 12.7 mm, a distance between grips is 50 mm, and a measurement speed is 50 mm/min.

When the stretch ratio of the electrolytic copper foil 101 is less than 2% at room temperature, an occurrence rate of a tear of the electrolytic copper foil 101 increases in a roll-to-roll process during a manufacturing process of copper foil, and when the electrolytic copper foil 101 is used as a current collector of a secondary battery, in response to a large volume expansion of a high-capacity active material, there is a risk that the electrolytic copper foil 101 is not sufficiently stretched and is torn. Meanwhile, when the stretch ratio becomes excessively large exceeding 15%, the electrolytic copper foil 101 is easily stretched in a manufacturing process of the secondary battery so that deformation of an electrode may occur.

According to one embodiment of the present disclosure, the electrolytic copper foil 101 may have tensile strength ranging from 41.0 kgf/mm$^2$ to 75.0 kgf/mm$^2$ at room temperature (25±15 °C).

The tensile strength of the electrolytic copper foil 101 may be measured by the UTM according to the method specified in the IPC-TM-650 test method manual. According to one embodiment of the present disclosure, equipment of Instron® may be used. In this case, a width of a sample for measuring a stretch ratio is 12.7 mm, a distance between grips is 50 mm, and a measurement speed is 50 mm/min.

When the tensile strength of the electrolytic copper foil 101 is less than 41.0 kgf/mm$^2$ at room temperature, in the roll-to-roll process during the manufacturing process of the copper foil or the manufacturing process of the secondary battery, the electrolytic copper foil 101 is easily deformed due to a force applied to the electrolytic copper foil 101 so that there is a risk in that tears or wrinkles may occur. On the other hand, when the tensile strength of the electrolytic copper foil 101 exceeds 75.0 kgf/mm$^2$, when the electrolytic copper foil 101 receives tension in the manufacturing process of the copper foil, a risk that the electrolytic copper foil 101 is torn increases and workability in the manufacturing process of the secondary battery is degraded.

According to one embodiment of the present disclosure, after heat treatment at a temperature of 190 °C for sixty minutes, the electrolytic copper foil 101 may have tensile strength ranging from 40.0 kgf/mm$^2$ to 65.0 kgf/mm$^2$.

After the heat treatment is performed on the electrolytic copper foil 101, the tensile strength may be measured using a UTM according to the method specified in the IPC-TM-650 test method manual for the electrolytic copper foil 101 which is heat treated at the temperature of 190 °C for sixty minutes. According to one embodiment of the present disclosure, equipment of Instron® may be used. In this case, a width of a sample for measuring a stretch ratio is 12.7 mm, a distance between grips is 50 mm, and a measurement speed is 50 mm/min.

When the tensile strength of the electrolytic copper foil 101 is less than 40.0 kgf/mm$^2$ after the heat treatment at the temperature of 190 °C for sixty minutes, in the roll-to-roll process during the manufacturing process of the copper foil or the manufacturing process of the secondary battery, there is a risk of wrinkles due to low strength of the electrolytic copper foil 101. On the other hand, when the tensile strength of the electrolytic copper foil 101 exceeds 65.0 kgf/mm$^2$ after the heat treatment, a stretch ratio of the electrolytic copper foil 101 decreases, and thus shearing occurs in the manufacturing process of the secondary battery.

According to one embodiment of the present disclosure, the electrolytic copper foil 101 may have tensile strength of 0.950 or more after the heat treatment at the temperature of 190 °C for sixty minutes with respect to the tensile strength at room temperature (25±15 °C). This may be expressed as in Equation 4 below.

[Equation 4]

$$\frac{\text{tensile strength after heat treatment at temperature of 190 °C for sixty minutes}}{\text{tensile strength at room temperature (25±15 °C)}} \geq 0.95$$

When the tensile strength after the heat treatment at the temperature of 190 °C for sixty minutes is less than 0.950 with respect to the tensile strength at room temperature (25±15 °C), after the heat treatment of the electrolytic copper foil 101, the strength of the electrolytic copper foil 101 is decreased, and thus shearing occurs due to volumetric expansion during charging and discharging of the secondary battery. The shearing of the electrolytic copper foil 101 degrades a charging and discharging efficiency of the secondary battery.

According to one embodiment of the present disclosure, the electrolytic copper foil 101 may have a thickness ranging from 2.0 $\mu$m to 18.0 $\mu$m.

When the electrolytic copper foil 101 is used as a current collector of an electrode in the secondary battery, since the smaller the thickness of the electrolytic copper foil 101, the more the current collector may be accommodated in the same space, it is advantageous for a high capacity of the secondary battery. Therefore, when the thickness of the electrolytic copper foil 101 exceeds 18.0 $\mu$m, the thickness of the electrode for a secondary battery using the electrolytic copper foil 101 is increased, and due to this thickness, it may be difficult to implement a high capacity of the secondary battery. On the other hand, when the thickness of the electrolytic copper foil 101 is less than 2.0 $\mu$m, workability is significantly degraded in the manufacturing process of the electrode for a secondary battery and the secondary battery using the electrolytic copper foil 101.

According to another embodiment of the present disclosure, an electrolytic copper foil 102 may further include a first protective layer 120 disposed on a copper layer 110. Hereinafter, in order to avoid a duplicate description, descriptions of the above-described components will be omitted herein.

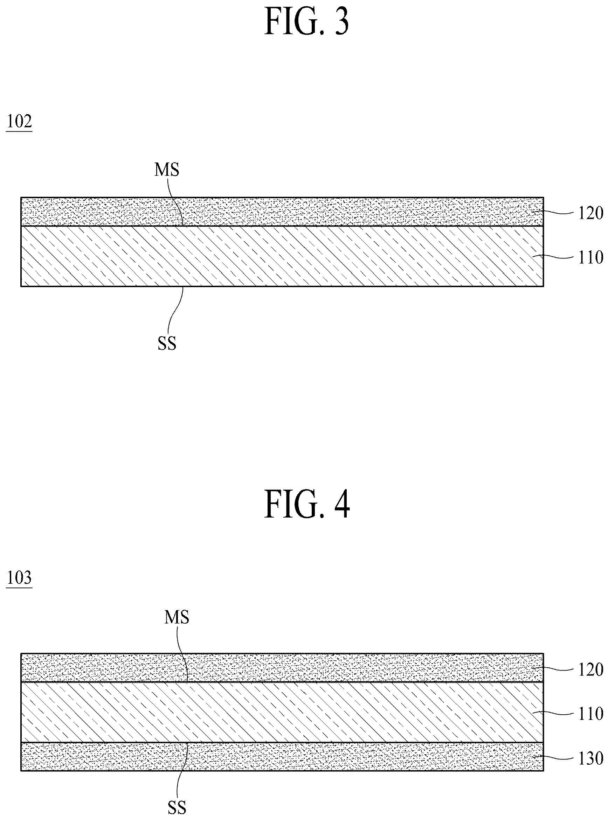

FIG. 3 is a schematic cross-sectional view illustrating the electrolytic copper foil 102 according to another embodiment of the present disclosure. Hereinafter, the electrolytic copper foil 102 including the first protective layer 120 will be described with reference to FIG. 3.

The first protective layer 120 may be disposed on at least one surface of the copper layer 110. Referring to FIG. 3, the first protective layer 120 is disposed on an upper surface of the copper layer 110. However, an embodiment of the present disclosure is not limited thereto, and the first protective layer 120 may be disposed on a lower surface of the copper layer 110.

The first protective layer 120 may protect the copper layer 110 to prevent the copper layer 110 from being oxidized or deteriorated during preservation or distribution. Therefore, the first protective layer 120 is referred to as an anti-corrosive membrane.

According to another embodiment of the present disclosure, the first protective layer 120 may include at least one among chromium (Cr), a silane compound, and a nitrogen compound.

According to another embodiment of the present disclosure, an orientation index M of a (220) surface among crystal surfaces of the copper layer 110 is one or more.

According to another embodiment of the present disclosure, the electrolytic copper foil 102 may have a stretch ratio ranging from 2% to 15% at room temperature (25±15 °C).

According to another embodiment of the present disclosure, the electrolytic copper foil 102 may have tensile strength ranging from 41.0 kgf/mm$^2$ to 75.0 kgf/mm$^2$ at room temperature (25±15 °C).

According to another embodiment of the present disclosure, after the heat treatment at a temperature of 190 °C for sixty minutes, the electrolytic copper foil 102 may have tensile strength ranging from 40.0 kgf/mm$^2$ to 65.0 kgf/mm$^2$.

According to another embodiment of the present disclosure, the electrolytic copper foil 102 may have tensile strength of 0.950 or more after the heat treatment at the temperature of 190 °C for sixty minutes with respect to the tensile strength at room temperature (25±15 °C).

According to another embodiment of the present disclosure, the electrolytic copper foil 102 may have a thickness ranging from 2.0 μm to 18.0 μm.

According to still another embodiment of the present disclosure, an electrolytic copper foil 103 may further include a second protective layer 130 disposed on a copper layer 110. Hereinafter, in order to avoid a duplicate description, descriptions of the above-described components will be omitted herein.

FIG. 4 is a schematic cross-sectional view illustrating the electrolytic copper foil 103 according to still another embodiment of the present disclosure. Hereinafter, the electrolytic copper foil 103 including the second protective layer 130 will be described with reference to FIG. 4.

As shown in FIG. 4, the second protective layer 130 may be disposed on a surface opposite to one surface on which the first protective layer 120 of the copper layer 110 is disposed. When compared with the electrolytic copper foil 101 shown in FIG. 1, the electrolytic copper foil 103 shown in FIG. 4 includes the copper layer 110, and first and second protective layers 120 and 130 disposed on both surfaces of the copper layer 110.

According to an embodiment of the present disclosure, the second protective layer 130 may include at least one among Cr, a silane compound, and a nitrogen compound.

According to an embodiment of the present disclosure, an orientation index M of a (220) surface among crystal surfaces of the copper layer 110 is one or more.

According to an embodiment of the present disclosure, the electrolytic copper foil 103 may have a stretch ratio ranging from 2% to 15% at room temperature (25±15 °C).

According to an embodiment of the present disclosure, the electrolytic copper foil 103 may have tensile strength ranging from 41.0 kgf/mm$^2$ to 75.0 kgf/mm$^2$ at room temperature (25±15 °C).

According to an embodiment of the present disclosure, after heat treatment at a temperature of 190 °C for sixty minutes, the electrolytic copper foil 103 may have tensile strength ranging from 40.0 kgf/mm$^2$ to 65.0 kgf/mm$^2$.

According to an embodiment of the present disclosure, the electrolytic copper foil 103 may have tensile strength of 0.950 or more after the heat treatment at the temperature of 190 °C for sixty minutes with respect to the tensile strength at room temperature (25±15 °C).

According to an embodiment of the present disclosure, the electrolytic copper foil 103 may have a thickness ranging from 2.0 μm to 18.0 μm.

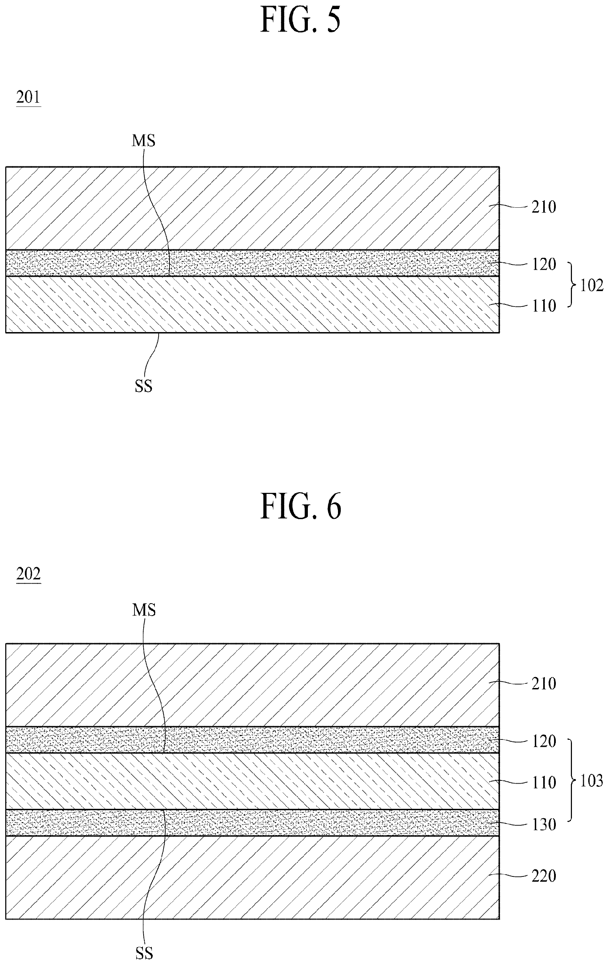

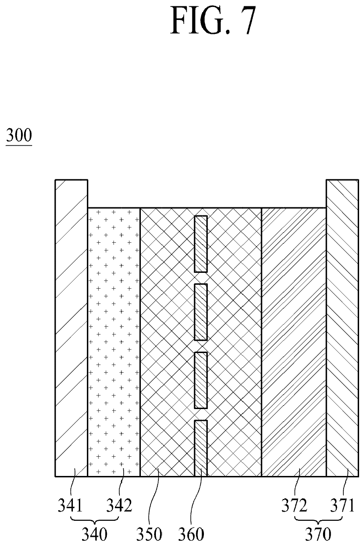

FIG. 5 is a schematic cross-sectional view illustrating an electrode 201 for a secondary battery according to yet another embodiment of the present disclosure. For example, the electrode 201 for the secondary battery shown in FIG. 5 may be applied to a secondary battery 300 shown in FIG. 7.

Referring to FIG. 5, the electrode 201 for a secondary battery according to yet another embodiment of the present disclosure includes an electrolytic copper foil 102 and an active material layer 210 disposed on the electrolytic copper foil 102. Here, the electrolytic copper foil 102 includes a copper layer 110 and a first protective layer 120 disposed on the copper layer 110 and is used as a current collector.

Specifically, the active material layer 210 may be disposed on at least one surface of the electrolytic copper foil 102. Referring to FIG. 5, the active material layer 210 may be disposed on the first protective layer 120. However, the embodiment of the present disclosure is not limited thereto, and the active material layer 210 may be disposed on a lower surface of the copper layer 110.

FIG. 5 shows an example in which the electrolytic copper foil 102 of FIG. 3 is used as a current collector. However, yet another embodiment of the present disclosure is not limited thereto, and the electrolytic copper foil 101 shown in FIG. 1 or the electrolytic copper foil 103 shown in FIG. 4 may be used as a current collector of the electrode 201 for a secondary battery.

Alternatively, although a structure in which the active material layer 210 is disposed on only one surface of the electrolytic copper foil 102 is shown in FIG. 5, yet another embodiment of the present disclosure is not limited thereto, and active material layers 210 and 220 may be disposed on both surfaces of the electrolytic copper foil 102. Alternatively, the active material layer 210 may be disposed on only a surface opposite to a surface on which a first protective layer of an electrolytic copper foil 102 is disposed.

The active material layer 210 shown in FIG. 5 is made of an electrode active material and, in particular, may be made of an anode active material. That is, the electrode 201 for a secondary battery shown in FIG. 5 may be used as an anode.

The active material layer 210 may include at least one among carbon, a metal, an alloy containing a metal, a metal oxide, and a composite of a metal and carbon as an anode active material. At least one among Si, Ge, Sn, Li, Zn, Mg, Cd, Ce, Ni, and Fe may be used as the metal. In addition, in order to increase a charging/discharging capacity of a secondary battery, the active material layer 210 may include Si.

As charging/discharging of a secondary battery is repeated, contraction and expansion of the active material layer 210 occur alternately. This causes separation of the active material layer 210 from the copper foil 102, thereby degrading a charging/discharging efficiency of the secondary battery. In particular, the active material layer 210 including Si is significantly expanded and contracted.

According to yet another embodiment of the present disclosure, since the electrolytic copper foil 102 used as a current collector may be contracted and expanded in response to the contraction and expansion of the active material layer 210, even when the active material layer 210 is contracted and expanded, the electrolytic copper foil 102 is not deformed or torn. Thus, no separation occurs between the electrolytic copper foil 102 and the active material layer 210. Accordingly, the secondary battery including the electrode 201 for a secondary battery has an excellent charge/discharge efficiency and excellent capacity retention rate.

FIG. 6 is a schematic cross-sectional view illustrating an electrode 202 for a secondary battery according to yet another embodiment of the present disclosure.

The electrode 202 for a secondary battery according to yet another embodiment of the present disclosure includes an electrolytic copper foil 103 and active material layers 210 and 220 disposed on the electrolytic copper foil 103. The electrolytic copper foil 103 includes a copper layer 110, and anti-corrosive membranes 120 and 130 disposed on both surfaces of the copper layer 110.

Specifically, the electrode 202 for a secondary battery shown in FIG. 6 includes the two active material layers 210 and 220 disposed on both surfaces of the electrolytic copper foil 103. For convenience of description, the active material layer 210 disposed on an upper surface of the electrolytic copper foil 103 is referred to as a first active material layer, and the active material layer 220 disposed on a lower surface of the electrolytic copper foil 103 is referred to as a second active material layer.

The two active material layers 210 and 220 may be made of the same material through the same method and, alternatively, may be made of different materials or through different methods.

FIG. 7 is a schematic cross-sectional view illustrating a secondary battery 300 according to yet another embodiment of the present disclosure. For example, the secondary battery 300 shown in FIG. 7 is a lithium secondary battery.

Referring to FIG. 7, the secondary battery 300 includes a cathode 370, an anode 340, an electrolyte 350 disposed between the cathode 370 and the anode 340 to provide an environment for ions to move, and a separator 360 for electrically insulating the cathode 370 from the anode 340. Here, the ions moving between the cathode 370 and the anode 340 are, for example, lithium ions. The separator 360 separates the cathode 370 from the anode 340 to prevent charges, which are generated from one electrode, from moving to another electrode through an inside of the secondary battery 300 to be uselessly consumed. Referring to FIG. 7, the separator 360 is disposed in the electrolyte 350.

The cathode 370 includes a cathode current collector 371 and a cathode active material layer 372, and aluminum foil may be used as the cathode current collector 371.

The anode 340 includes an anode current collector 341 and an anode active material layer 342, and copper foil may be used as the anode current collector 341.

According to one embodiment of the present disclosure, the copper foil 101, 102, or 103 shown in FIG. 1, 3, or 4 may be used as the anode current collector 341. In addition, the electrode 201 or 202 for a secondary battery shown in FIG. 5 or 6 may be used as the anode 340 of the secondary battery 300 shown in FIG. 7.

Hereinafter, a method of manufacturing an electrolytic copper foil according to one embodiment of the present disclosure will be described in detail.

The method of manufacturing an electrolytic copper foil of the present disclosure includes preparing an electrolyte containing copper ions and an organic additive and forming a copper layer by electrically connecting a cathode plate and a rotating anode drum, which are disposed to be spaced apart from each other in the electrolyte, at a current density.

In addition, the method of manufacturing an electrolytic copper foil of the present disclosure further includes purifying the organic additive using at least one among carbon filtration, diatomaceous earth filtration, and ozone treatment.

Specifically, the electrolyte containing the copper ions and the organic additive is prepared. The electrolyte is accommodated in an electrolyzer.

The organic additive is purified by at least one method among carbon filtration, diatomaceous earth filtration, and ozone treatment. The purification of the organic additive may be performed in a solution state of the organic additive before adding the organic additive to the electrolyte or may be performed in an electrolyte state after adding the organic additive to the electrolyte. Therefore, the purification of the organic additive may be performed before or after the preparation of the electrolyte or may be simultaneously performed with the preparation of the electrolyte.

Then, the cathode plate and the rotating anode drum, which are disposed to be spaced apart from each other in the electrolyte, are electrically connected at a current density ranging from 40 ASD to 70 ASD (A/dm$^2$) so that a copper layer is formed. The copper layer is formed due to the principle of electroplating. A gap between the cathode plate and the rotating anode drum may be adjusted in the range of 5 mm to 20 mm.

When the current density applied between the cathode plate and the rotating anode drum is less than 40 ASD, the generation of a crystal grain of the copper layer is increased, and when the current density applied between the cathode plate and the rotating anode drum exceeds 70 ASD, fineness of the crystal grain is accelerated. More specifically, the current density may be adjusted to 45 ASD or more.

A characteristic of a surface of the copper layer in contact with the rotating anode drum may be varied according to a degree of buffing or polishing of a surface of the rotating anode drum. In order to adjust the characteristic of the surface of the copper layer in contact with the rotating anode drum, the surface of the rotating anode drum may be polished with a polishing brush having, for example, a grit ranging from #800 to #3000.

During the formation of the copper layer, the electrolyte is maintained at a temperature ranging from 40 °C to 70 °C. More specifically, the temperature of the electrolyte may be maintained at a temperature of 45 °C or higher. A flow rate at which the electrolyte circulates ranges from 20 m$^3$/hr to 60 m$^3$/hr. In this case, by adjusting a composition of the electrolyte, physical, chemical, and electrical characteristics of the copper layer may be controlled.

According to one embodiment of the present disclosure, the electrolyte includes 80 to 120 g/L copper ions, 80 to 150 g/L sulfuric acid, 0.01 to 1.5 ppm chlorine ions (Cl$^-$), and an organic additive.

In order to facilitate the formation of the copper layer due to copper electrodeposition, a concentration of the copper ions and a concentration of the sulfuric acid in the electrolyte are adjusted to the range of 80 g/L to 120 g/L and the range of 80 g/L to 150 g/L, respectively.

For example, in one embodiment of the present disclosure, the chlorine ions (Cl$^-$) may be used to remove silver (Ag) ions introduced into the electrolyte during the formation of the copper layer. Specifically, the chlorine ions (Cl$^-$) may precipitate the Ag ion in the form of silver chloride (AgCl). This AgCl may be removed through filtration.

When the concentration of the chlorine ions (Cl$^-$) is less than 0.01 ppm, removal of the Ag ions is not performed smoothly. On the other hand, when the concentration of the chlorine ions (Cl$^-$) exceeds 1.5 ppm, an unnecessary reaction may occur due to an excessive amount of the chlorine ions (Cl$^-$). Therefore, the concentration of the chlorine ions (Cl$^-$) in the electrolyte is managed in the range of 0.01 ppm to 1.5 ppm. More specifically, the concentration of chlorine ions (C1-) may be managed to 1 ppm or less, for example, in the range of 0.1 ppm to 1 ppm.

According to one embodiment of the present disclosure, the organic additive included in the electrolyte includes a crystalline regulator. The crystalline regulator includes an organic compound having an amino group (-NR$_2$) and a carboxyl group (-COOH). R of the amino group is hydrogen (H) or a substituent such as an alkyl group, and the substituent is not particularly limited. That is, the crystalline regulator may be an organic compound including one or more amino groups and one or more carboxyl groups in one molecule.

The crystalline regulator controls a size of a plated copper particle of the electrolytic copper foil to adjust a size of a crystalline structure of the copper layer. Consequently, an orientation index of the crystal surface of the copper layer may be adjusted.

A concentration of the crystalline regulator may range from 0.5 ppm to 15.0 ppm. More specifically, the concentration of the crystalline regulator may range from 0.5 ppm to 5.0 ppm.

When the concentration of the crystalline regulator is less than 0.5 ppm, after the heat treatment at a high temperature 190 °C for sixty minutes, an electrolytic copper foil having tensile strength of less than 40.0 kgf/mm$^2$ is manufactured. On the other hand, when the concentration of the crystalline regulator exceeds 15 ppm, after the heat treatment at a high temperature 190 °C for sixty minutes, an electrolytic copper foil having tensile strength of more than 65.0 kgf/mm$^2$ is manufactured.

According to one embodiment of the present disclosure, the organic compound of the crystalline regulator may further include one or more thiol groups (-SH). That is, the organic compound may include one or more amino groups, one or more carboxyl groups, and one or more thiol groups in one molecule. The crystalline regulator may include a cysteine structure. In the case of including a crystalline regulator including a cysteine structure, it is possible to prevent the copper foil from self-annealing after the heat treatment. In addition, the crystalline regulator including the cysteine structure prevents the crystalline structure of the copper layer from coarsening, thereby allowing an orientation index of the (220) surface of the copper layer to be one or more and allowing copper foil having characteristics of high strength and high heat resistance to be manufactured.

According to one embodiment of the present disclosure, the crystalline regulator may include at least one selected from, for example, collagen, gelatin, and a decomposition material of the collagen and the gelatin. The collagen and the gelatin may each include both of a low-molecular material and a high-molecular material. The collagen and the gelatin may each include a cysteine structure.

The collagen and the gelatin are materials added to the electrolyte so as to control the size of the plated copper particle in the electrolyte and the orientation index of the (220) surface of the crystal surface of the copper layer and improve strength of the electrolytic copper foil.

According to one embodiment of the present disclosure, the method of manufacturing an electrolytic copper foil of the present disclosure may further include purifying the organic additive. Specifically, the purifying of the organic additive is a purification operation of removing organic and inorganic impurities, for example, various oils and Cl which are present in the organic additive or the electrolyte to improve purity of the organic additive, and the purifying may use at least one among, for example, carbon filtration, diatomaceous earth filtration, and ozone treatment.

Instead of the purifying of the organic additive, high strength of the electrolytic copper foil may be achieved by a method of increasing the concentration of the crystalline regulator. However, when the concentration of the crystalline regulator simply increases, a concentration of the organic impurity or the inorganic impurity also increases so that the stretch ratio of the electrolytic copper foil may be significantly decreased, a yield in the manufacturing process may be decreased, and stains may occur on an appearance of the electrolytic copper foil.

In addition to the organic additive, organic and inorganic impurities are present in the organic additive added to the electrolyte. The organic and inorganic impurities increase a content of organic matter or inorganic matter in the electrolyte to affect electrodeposition of a plating film of the electrolytic copper foil. For example, when a content of Cl content in the electrolyte is increased, the orientation index of the (220) surface of the electrolytic copper foil is decreased and the tensile strength is also decreased.

The purifying of the organic additive removes organic and inorganic impurities incidentally present before or after adding the organic additive to the electrolyte, thereby allowing the orientation index of the (220) surface of the electrolytic copper foil to be one or more, the tensile strength to be 41.0 kgf/mm$^2$ or more, and the stretch ratio to be 2% or more.

According to one embodiment of the present disclosure, the purifying of the organic additive may include at least one among filtration of the organic additive using carbon (carbon filtration), filtration of the organic additive using diatomaceous earth (diatomaceous earth), and treatment of the organic additive using ozone ($O_3$) (ozone treatment).

The carbon filtration removes organic and inorganic impurities of the organic additive using carbon for filtration. The carbon for filtration used for the carbon filtration is activated carbon and is an aggregate of carbon including a plurality of micropores in one particle. The micropores of the carbon for filtration may form a large surface area inside the carbon, thereby having excellent physical and chemical adsorption adsorbability. Due to the excellent adsorbability of the carbon for filtration, impurities present in the organic additive may be absorbed and adhered to be removed.

According to one embodiment of the present disclosure, the carbon for filtration used for the carbon filtration may include at least one of granular carbon and fragmented carbon.

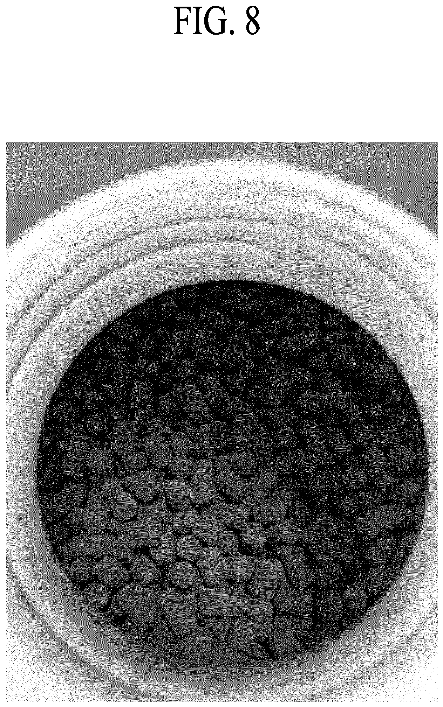

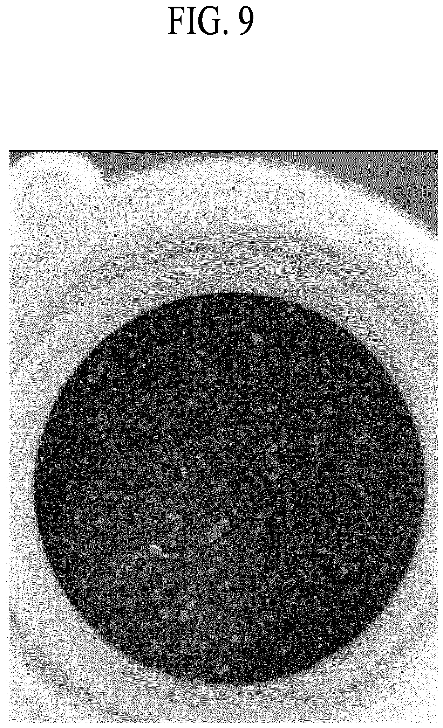

FIG. 8 is a photograph capturing the granular carbon, and FIG. 9 is a photograph capturing the fragmented carbon. Both the granular carbon and the fragmented carbon are activated carbon, have no difference in components, and have a difference in surface area and adsorbability due to a shape difference. As shown in FIGS. 8 and 9, the granular carbon has a cylindrical shape, whereas the fragmented carbon has a thin, non-uniform, sculptural shape.

The smaller a particle size of the carbon for filtration, the greater the surface area. Accordingly, due to physical and chemical actions, a probability of coming into contact with an additive and adsorption efficiency may be excessively increased. When the particle size of the carbon for filtration is too small, there is a problem of adsorbing an effective organic additive in addition to the organic impurity. Therefore, the carbon for filtration should have an appropriate particle size. Since the granular carbon and the fragmented carbon can filter out only impurity from the organic additive, the granular carbon and the fragmented carbon are suitable for use in the carbon filtration.

Specifically, the carbon filtration may be performed by adding the granular carbon and/or the fragmented carbon to the organic additive and stirring the organic additive. The organic additive is filtered by the added carbon for filtration. In this case, a solution of the added water-soluble organic additive is prepared in distilled water at a concentration ranging from 5000 ppm to 50000 ppm, and the granular carbon or the fragmented carbon is added at a concentration ranging from 2 g/L to 10 g/L.

When the concentration of the organic additive is less than 5000 ppm, the carbon filtration takes a long time, and when the concentration of the organic additive exceeds 50000 ppm, an effect of the carbon filtration is insignificant, and thus the impurity is not sufficiently removed.

When the concentration of the granular carbon and/or the fragmented carbon is less than 2 g/L, the effect of the carbon filtration is insignificant, the time required is increased, and the impurity is not sufficiently removed. On the other hand, when the concentration of the granular carbon and/or the fragmented carbon exceeds 10 g/L, an effective organic additive is adsorbed such as to not obtain a desired physical property of the copper foil and a deviation in physical property increases.

The organic additive solution to which the granular carbon or the fragmented carbon is added may be circulated for 30 to 90 minutes to remove the organic impurity present in the organic additive. Consequently, total organic carbon (TOC) of the electrolyte may be decreased.

When the carbon-filtered organic additive is used, after heat treatment is performed at a temperature of 190 °C for sixty minutes for tensile strength at room temperature, an electrolytic copper foil having tensile strength of 0.950 or more may be manufactured. In addition, due to the carbon filtration of the organic additive, after the heat treatment at the temperature of 190 °C for sixty minutes, the tensile strength of the electrolytic copper foil becomes 40.0 kgf/mm$^2$ or more.

The diatomaceous earth filtration removes organic and inorganic impurities of the organic additive using diatomaceous earth. Specifically, the diatomaceous earth may be added to a filter tank to form a diatomaceous earth filter pack, and the diatomaceous earth filtration may be performed by adding the organic additive.

The ozone treatment is to treat the electrolyte using $O_3$ so as to maintain cleanliness of the organic additive. Specifically, for example, in a filter tank in which an ozone generator is installed, organic and inorganic impurities may be decomposed and removed by $O_3$. The ozone-treated solution may be filtered again using diatomaceous earth.

For cleanliness of the electrolyte, a copper (Cu) wire which is a raw material of the electrolyte may be cleaned.

According to one embodiment of the present disclosure, the preparing of the electrolyte includes heat-treating the Cu wire, acid-cleaning the heat-treated Cu wire, water-cleaning the acid-cleaned Cu wire, and putting the water-cleaned Cu wire into sulfuric acid for the electrolyte.

More specifically, in order to maintain the cleanliness of the electrolyte, by sequentially performing heat treatment on a high purity (99.9% or more) Cu wire in an electric furnace at a temperature ranging from 750 °C to 850 °C to burn off various organic impurities attached to the Cu wire, performing acid-cleaning on the Cu wire heat-treated for 10 to 20 minutes using a 10% sulfuric acid solution, and performing water-cleaning on the acid-cleaned Cu wire using distilled water, Cu for preparation of the electrolyte may be prepared. The electrolyte may be prepared by mixing the water-cleaned Cu wire with sulfuric acid for the electrolyte.

According to one embodiment of the present disclosure, in order to satisfy the characteristic of the electrolytic copper foil, a TOC concentration in the electrolyte is managed to be 50 ppm or less. That is, the electrolyte may have the TOC concentration in the range at 50 ppm or less.

As the TOC concentration in the electrolyte is increased, an amount of a C element introduced into the copper layer is increased, and thus during the heat treatment, an amount of the total element released from the copper layer is increased to cause degradation of strength of the electrolytic copper foil after the heat treatment.

According to one embodiment of the present disclosure, by adjusting a concentration of the organic additive added to the electrolyte, particularly, a concentration of the organic additive including nitrogen (N) or sulfur (S) or removing organic impurities, a predetermined amount of C, H, N, or S may be vacated in the copper layer. The orientation index of the copper layer may be controlled due to the vacancy.

The manufactured copper layer as described above may be cleaned in a cleaning bath.

For example, acid-cleaning for removing the impurity, for example, a resin component or natural oxide, on a surface of the copper layer, and water-cleaning for removing an acid solution used in the acid-cleaning may be sequentially performed. The cleaning process may be omitted.

The electrolytic copper foil may be manufactured through the above operations.

According to one embodiment of the present disclosure, the method of manufacturing an electrolytic copper foil may further include forming a protective layer on the copper layer using an anti-corrosive liquid.

At least one protective layer is formed on the copper layer through the forming of the protective layer.

The protective layer may be formed on the copper layer by immersing the copper layer in the anti-corrosive liquid accommodated in an anti-corrosion tank. The anti-corrosive liquid may include at least one among chromium (Cr), a silane compound, and a nitrogen compound, and Cr may exist in an ionic state in the anti-corrosive liquid.

At least one among Cr, the silane compound, and the nitrogen compound included in the anti-corrosive liquid may be 1 to 10 g/L. In order to form the protective layer, a temperature of the anti-corrosive liquid may be maintained at a temperature ranging from 20 °C to 40 °C. The copper layer may be immersed in the anti-corrosive liquid for one to thirty seconds.

When a concentration of at least one among Cr, the silane compound, and the nitrogen compound in the anti-corrosive liquid is less than 1 g/L, the protective layer does not serve to protect the copper layer, and corrosion of the copper layer is accelerated to shear the electrolytic copper foil. On the other hand, when the concentration exceeds 10 g/L, since the concentration exceeds a required amount to obtain the electrolytic copper foil having anti-corrosive performance of the present disclosure, economic feasibility and efficiency are degraded.

Due to the formation of the anti-corrosive membrane, the electrolytic copper foil including the protective layer is formed.

Next, the electrolytic copper foil is cleaned in the cleaning bath. The cleaning process may be omitted.

Next, after a drying process is performed, the electrolytic copper foil is wound around a winder(WR).

An anode active material is coated on the electrolytic copper foil of the present disclosure, which is manufactured as described above, and thus an electrode for a secondary battery (i.e., an anode) of the present disclosure may be manufactured.

The anode active material may be selected from the group consisting of carbon, a metal including Si, Ge, Sn, Li, Zn, Mg, Cd, Ce, Ni, or Fe, an alloy including the metal, an oxide of the metal, and a composite of the metal and carbon.

For example, 100 parts by weight of carbon for an anode active material is mixed with 1 to 3 parts by weight of styrene butadiene rubber (SBR) and 1 to 3 parts by weight of carboxymethyl cellulose (CMC), and then distilled water is used as a solvent to prepare a slurry. Then, the slurry is applied on the copper 102 using a doctor blade with a thickness ranging from 20 $\mu$m to 100 $\mu$m and pressed at a pressure ranging from 0.5 ton/cm$^2$ to 1.5 ton/cm$^2$ and a temperature ranging from 110 °C to 130 °C.

A lithium secondary battery may be manufactured using a conventional cathode, a conventional electrolyte, and a conventional separator together with the electrode for a secondary battery (anode) of the present disclosure manufactured by the above-described method.

Hereinafter, the present disclosure will be described in detail through Examples and Comparative Examples. However, Examples and Comparative Examples below are merely to aid understanding of the present disclosure, and the scope of the present disclosure is not limited by Manufacturing Examples or Comparative Examples.

Examples 1 to 4 and Comparative Examples 1 to 5

Electrolytic copper foils were manufactured using a depositing machine including an electrolyzer, a rotating anode drum disposed in the electrolyzer, and a cathode plate disposed to be spaced apart from the rotating anode drum. The electrolyte was a copper sulfate solution. A concentration of copper ions in the electrolyte was set to 85 g/L, a concentration of sulfuric acid was set to 105 g/L, an average temperature of the electrolyte was set to 55 °C, and a current density was set to 60 ASD.

In addition, the presence or absence of carbon filtration, a type and a concentration of an organic additive included in the electrolyte, and a concentration of Cl$^-$ were shown in Table 1 below.

In Examples 1 to 4 and Comparative Examples 1, 3, and 4, the organic additive was pretreated using carbon filtration before adding the organic additive to the electrolyte. Granular carbon was used in the carbon filtration. A solution of a water-soluble organic additive to be added was prepared in distilled water at a concentration of 50000 ppm, and the granular carbon was added at a concentration of 10 g/L. The carbon filtration was performed by circulating the organic additive solution for sixty minutes.

In Table 1 below, "Y" indicated that the carbon filtration was performed, and "N" indicated that the carbon filtration was not performed.

Collagen of the organic additive, which had a molecular weight ranging from 2000 to 7000 and a cysteine structure, was used. In addition, gelatin having a molecular weight ranging from 4000 to 15000 and a cysteine structure was used.

A copper layer was manufactured by applying a current between the rotating anode drum and the cathode plate at a current density of 60 ASD. Next, an electrolytic copper foil was manufactured such that the copper layer was immersed in an anti-corrosive liquid for about two seconds and chromate treatment was performed on a surface of the copper layer to form first and second protective layers. An anti-corrosive liquid containing chromic acid as a main component was used as the anti-corrosive liquid, and a concentration of the chromic acid was 5 g/L.

As a result, the electrolytic copper foils of Examples 1 to 4 and Comparative Examples 1 to 5 were manufactured. All the electrolytic copper foils had the same thicknesses of 8 $\mu$m.

[Table 1]

|  | Carbon Filtration (Y/N) | Gelatin (ppm) | ColA (ppm) | Cl ions (ppm) |
|---|---|---|---|---|
| Example 1 | Y | 1 | - | 0.3 |
| Example 2 | Y | 5 | - | 0.5 |
| Example 3 | Y | - | 3 | 0.1 |
| Example 4 | Y | - | 8 | 0.3 |
| Comparative Example 1 | Y | 0.3 | - | 1.1 |
| Comparative Example 2 | N | 10 | - | 0.3 |
| Comparative Example 3 | Y | - | 10 | 1.6 |
| Comparative Example 4 | Y | - | 25 | 0.3 |
| Comparative Example 5 | N | 3 | - | 0.3 |

Gelatin: Gelatin

ColA: Collagen

With respect to the electrolytic copper foils of Examples 1 to 4 and Comparative Examples 1 to 5 which were manufactured as described above, (i) an orientation index M(220) of a (220) surface, (ii) a stretch ratio (at room temperature), (iii) tensile strength at room temperature after heat treatment, and (iv) tensile strength after the heat treatment at a temperature of 190 °C for sixty minutes for the tensile strength at room temperature were measured, and (v) cross sections of the electrolytic copper foils were captured and analyzed using electron back scatter diffraction (EBSD).

In addition, a secondary battery was manufactured using the electrolytic copper foil, and after charging and discharging were performed on the secondary battery, (vi) the secondary battery was disassembled and whether wrinkles occurred was observed.

(i) Measurement of orientation index M(220) of (220) surface

The orientation index M (220) of the (220) surface of each of the electrolytic copper foils manufactured in Examples 1 to 4 and Comparative Examples 1 to 5 is obtained by Equation 1 below.

[Equation 1]

$$M(220) = IR(220)/IFR(220)$$

In Equation 1, IR 220 and IFR 220 are obtained by Equations 2 and 3 below, respectively.

[Equation 2]

$$IR(220) = \frac{I(220)}{\sum I(hkl)}$$

[Equation 3]

$$IFR(220) = \frac{IF(220)}{\sum IF(hkl)}$$

In Equation 2, I(hkl) denotes an XRD diffraction intensity of each crystal surface (hkl) of the electrolytic copper foil 101, and I(220) denotes an XRD diffraction intensity of the (220) surface of the electrolytic copper foil 101. In Equation 3, IF(hkl) denotes an XRD diffraction intensity of each crystal surface (hkl) of a standard sample, which is non-oriented with respect to all crystal surfaces specified in Joint Committee on Powder Diffraction Standards (JCPDS), and IF(220) denotes an XRD diffraction intensity of a (220) surface of the standard sample.

In order to measure the relative diffraction intensity IR(hkl) of the specific crystal surface (hkl) with respect to the copper layer 110, an XRD graph having a peak corresponding to each crystal surface is obtained first through the XRD within a diffraction angle (2θ) ranging from 30° to 95° (target: copper K alpha 1, 2θ interval: 0.01°, and 2θ scan speed: 1°/min).

An XRD graph including four peaks corresponding to a (111) surface, a (200) surface, a (220) surface, and a (311) surface of the copper layer 110 is obtained. Next, the XRD diffraction intensity I(hkl) of each crystal surface (hkl) is calculated from the XRD graph. A value, which is calculated by substituting the XRD diffraction intensity I(hkl) of each crystal surface (hkl) obtained in this way into Equation 2, is a relative diffraction intensity IR(220) of the (220) surface among the specific crystal surfaces with respect to the copper layer 110.

In addition, the relative diffraction intensity IFR(220) of the specific crystal surface (220) obtained from the standard sample which is non-oriented with respect to all the crystal surfaces may be calculated by substituting the XRD diffraction intensity IF(hkl) of the each crystal surface (hkl) of the standard sample, which is non-oriented with respect to all crystal surfaces specified by JCPDS, into Equation 3.

(ii) Measurement of stretch ratio at room temperature

Stretch ratios of the electrolytic copper foils manufactured in Examples 1 to 4 and Comparative Examples 1 to 5 were measured at room temperature (25±15 °C).

The stretch ratios were measured using a UTM according to a regulation of the IPC-TM-650 test method manual. Specifically, the stretch ratios were measured using a UTM of Instron®. A width of a sample for measuring the stretch ratio was 12.7 mm, a distance between grips was 50 mm, and a measurement speed was 50 mm/min.

(iii) Measurement of tensile strength at room temperature and tensile strength after heat treatment

Tensile strength of each of the electrolytic copper foils manufactured in Examples 1 to 4 and Comparative Examples 1 to 5 was measured at room temperature (25±15 °C), and after the heat treatment at a temperature of 190 °C for sixty minutes, the tensile strength of each of the electrolytic copper foils was measured.

The tensile strength at room temperature and the tensile strength after the heat treatment were measured using a UTM according to a regulation of the IPC-TM-650 test method manual. Specifically, the tensile strength at room temperature and the tensile strength after the heat treatment were measured using a UTM of Instron®. A width of a sample for measuring the stretch ratio was 12.7 mm, a distance between grips was 50 mm, and a measurement speed was 50 mm/min.

(iv) Tensile strength after heat treatment at temperature of 190 °C for sixty minutes with respect to tensile strength at room temperature

By using the tensile strength at room temperature and the tensile strength after the heat treatment at the temperature of 190 °C for sixty minutes of each of the electrolytic copper foil manufactured in Examples 1 to 4 and Comparative Example 1 to 5, the tensile strength after the heat treatment at the temperature of 190 °C for sixty minutes with respect to the tensile strength at room temperature was calculated.

(v) Cross section of electrolytic copper foil captured by EBSD

Cross-sections of the electrolytic copper foils manufactured in Examples 1 and 2 were captured using EBSD imaging equipment. Each of the electrolytic copper foils was captured twice at room temperature and after heat treatment at a temperature of 190 °C for one hour.

Specifically, a capturing condition and a capturing step are as follows.

    1. Fix a sample and perform cross-section hot mounting
    2. Perform mechanical polishing
    3. Mount the specimen on scanning electron microscope (SEM) equipment and measure a cross-section at an inclination of 70 degrees
    4. Measure each orientation

EBSD capturing equipment: S-4300SE of Hitachi, Ltd.

Analysis program: OIM analysis 7.0

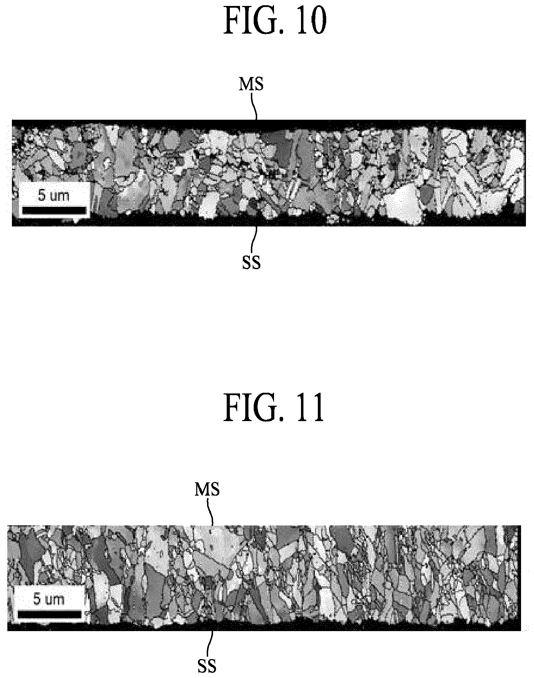

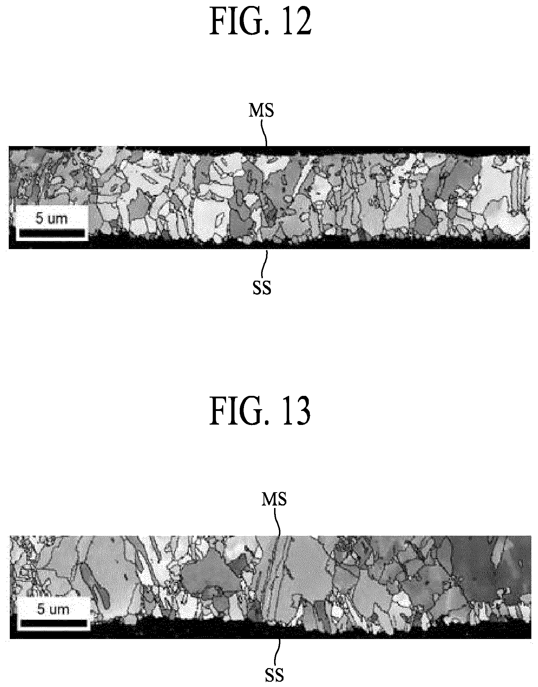

Among photographs of Example 1 captured by the above method, a photograph at room temperature is shown in FIG. 10, and a photograph after the heat treatment is shown in FIG. 11. In addition, among photographs of Example 2, a photograph at room temperature is shown in FIG. 12, and a photograph after the heat treatment is shown in FIG. 13.

(vi) The presence or absence of wrinkle occurrence of electrolytic copper foil

1) Manufacturing of anode

Two parts by weight of SBR and two parts by weight of CMC were mixed with 100 parts by weight of commercially available silicon/carbon composite anode material for an anode active material, and distilled water was used as a solvent to prepare a slurry for the anode active material. By using a doctor blade, a slurry for the anode active material was applied on each of the electrolytic copper foils of Examples 1 to 4 and Comparative Examples 1 to 5, which has a width of 10 cm and a thickness of 40 $\mu$m, and dried at a temperature of 120 °C and pressed at a pressure of one ton/cm$^2$, thereby manufacturing an anode for a secondary battery.

2) Manufacturing of electrolyte

A basic electrolyte was manufactured by dissolving LiPF6, which was a solute, at a concentration of 1M in a non-aqueous organic solvent in which ethylene carbonate (EC) and ethylmethyl carbonate (EMC) were mixed at a ratio of 1:2. A non-aqueous electrolyte was manufactured by mixing 99.5 wt% basic electrolyte and 0.5 wt% succinic anhydride.

3) Manufacturing of cathode

A cathode active material was prepared by mixing lithium manganese oxide, which was $Li_{1.1}Mn_{1.85}Al_{0.05}O_4$, with lithium manganese oxide, which has an orthorhombic crystal structure and is o-LiMnO$_2$, at a ratio of 90:10 (weight ratio). The cathode active material, carbon black, and PVDF (Poly(vinylidenefluoride)), which is a binder, were mixed at a ratio of 85:10:5 (weight ratio) and mixed with NMP, which is an organic solvent, to prepare a slurry. The slurry prepared as described above was coated on both surfaces of an Al foil having a thickness of 20 $\mu$m and dried to manufacture a cathode.

4) Manufacturing of lithium secondary battery for test

The cathode and the anode were disposed in an aluminum can so as to be insulated from the aluminum can, and the non-aqueous electrolyte and the separator were disposed between the cathode and the anode, thereby manufacturing a coin-type lithium secondary battery. The separator used was polypropylene (2325 of Celgard LLC., a thickness was 25 $\mu$m, an average pore size was $\varphi$28 nm, and porosity was 40%).

5) Charging/recharging of secondary battery

By using the lithium secondary battery manufactured as described above, a battery was driven with a charging voltage of 4.3 V and a discharging voltage of 3.4 V, and charging/discharging were performed 100 times at a high temperature of 50 °C and a current rate (C-rate) of 0.2.

6) The presence or absence of wrinkles or tears occurrence

After the charging/discharging 100 times, the secondary battery was disassembled to observe whether wrinkles or tears occurred in the copper foil. A case in which wrinkles or tears occurred in the copper foil was indicated as "occurrence", and a case in which the wrinkles or tears do not occurred in the copper foil was indicated as "non-occurrence."

The test results are shown in Table 2.

[Table 2]

| Items | Orientation index of (220) surface (M(220)) | Stretch ratio (%) | Tensile strength at room temperature | Tensile strength after heat treatment | Tensile strength after heat treatment | Wrinkles |
|---|---|---|---|---|---|---|
| | | | (kgf/mm$^2$) | (kgf/mm$^2$) | with respect to tensile strength at room temperature | |
| Example 1 | 1.2 | 4.9 | 43.5 | 41.5 | 0.954 | Non-occurrence |
| Example 2 | 2.8 | 3.9 | 54.8 | 52.8 | 0.964 | Non-occurrence |
| Example 3 | 1.8 | 4.7 | 46.7 | 44.4 | 0.951 | Non-occurrence |
| Example 4 | 3.4 | 3.8 | 58.2 | 56.2 | 0.966 | Non-occurrence |
| Comparative Example 1 | 1.6 | 8.2 | 41.2 | 30.4 | 0.738 | Occurrence |
| Comparative Example 2 | 0.8 | 1.7 | 63.5 | 61.3 | 0.965 | Occurrence |
| Comparative Example 3 | 0.8 | 3.4 | 40.0 | 34.9 | 0.873 | Occurrence |
| Comparative Example 4 | 2.2 | 4.5 | 69.8 | 67.8 | 0.971 | Occurrence |
| Comparative Example 5 | 0.9 | 1.9 | 40.7 | 38.8 | 0.953 | Occurrence |

Referring to Table 2, the following results can be confirmed.

In Comparative Example 1, a small amount of 0.3 ppm of gelatin was added to the crystalline regulator, and the tensile strength after the heat treatment was 30.4 kgf/mm$^2$, the tensile strength after heat treatment with respect to the tensile strength at room temperature was 0.738, and wrinkles occurred.

In Comparative Examples 2 and 5, the carbon filtration was not performed. In Comparative Example 2, the orientation index M(220) of the (220) surface was 0.8, the stretch ratio was less than 1.7%, and wrinkles occurred, and in Comparative Example 5, the orientation index M(220) of the (220) surface was 0.9, the stretch ratio was 1.9%, the tensile strength at room temperature was 40.7 kgf/mm$^2$, and the tensile strength after the heat treatment was 38.8 kgf/mm$^2$, and wrinkles occurred.

In Comparative Example 3, the concentration of Cl$^-$ was 1.6 ppm and was added excessively, the orientation index M(220) of the (220) surface was 0.8, the tensile strength at room temperature was 40.0 kgf/mm$^2$, and the tensile strength after the heat treatment was 34.9 kgf/mm$^2$, and the tensile strength after the heat treatment with respect to the tensile strength at room temperature was 0.873, and wrinkles occurred.

In Comparative Example 4, an excessive amount of 25 ppm of collagen was added to the crystalline regulator, the tensile strength after the heat treatment was 67.8 kgf/mm$^2$, and wrinkles occurred.

On the other hand, in the electrolytic copper foils of Examples 1 to 4 according to the present disclosure, all values were within reference values and no wrinkles occurred.

According to one embodiment of the present disclosure, it is possible to provide an electrolytic copper foil having an orientation index of a (220) surface that is one or more. In addition, according to one embodiment of the present disclosure, it is possible to provide an electrolytic copper foil having excellent strength and an excellent stretch ratio.

In addition, according to another embodiment of the present disclosure, it is possible to provide a method of manufacturing an electrolytic copper foil having an orientation index of a (220) surface that is one or more, excellent strength, and an excellent stretch ratio.

Accordingly, it is possible to manufacture a secondary battery in which occurrence of tears or wrinkles can be prevented during the copper foil or a manufacturing process of the secondary battery and a high charging/discharging capacity can be maintained despite repetition of charging and discharging cycles.

It should be understood that the embodiments of the present disclosure are not limited to the above described embodiments and the accompanying drawings, and various substitutions, modifications, and alterations can be devised by those skilled in the art without departing from the technical spirit of the present disclosure. Therefore, the scope of the present disclosure is defined by the appended claims, and all alternations or modifications derived from the meaning and scope of the claims and their equivalents should be construed as being included within the scope of the present disclosure.

**Claims**

1. An electrolytic copper foil comprising a copper layer,

   wherein the copper layer includes a (220) surface and an orientation index M(220) of the (220) surface is one or more,
   the orientation index M(220) of the (220) surface is obtained by Equation 1 below:

   [Equation 1]

   $$M(220) = IR(220)/IFR(220),$$

   in Equation 1, IR 220 and IFR 220 are obtained by Equations 2 and 3 below:

   [Equation 2]

   $$IR(220) = \frac{I(220)}{\sum I(hkl)},$$

   [Equation 3]

   $$IFR(220) = \frac{IF(220)}{\sum IF(hkl)},$$

   in Equation 2, I(hkl) denotes an X-ray diffraction (XRD) intensity of each crystal surface (hkl) of the electrolytic copper foil, and
   in Equation 3, IF(hkl) denotes the XRD intensity of each crystal surface (hkl) of Joint Committee on Powder Diffraction Standards (JCPDS) card.

2. The electrolytic copper foil of claim 1, wherein a stretch ratio ranges from 2% to 15% at room temperature.

3. The electrolytic copper foil of claim 1, wherein tensile strength ranges from 41.0 kgf/mm$^2$ to 75.0 kgf/mm$^2$ at room temperature.

4. The electrolytic copper foil of claim 1, wherein, after heat treatment at a temperature of 190 °C for sixty minutes, tensile strength ranges from of 40.0 kgf/mm$^2$ to 65.0 kgf/mm$^2$.

5. The electrolytic copper foil of claim 1, wherein tensile strength after heat treatment at a temperature of 190 °C for sixty minutes with respect to tensile strength at room temperature is 0.950 or more.

**6.** The electrolytic copper foil of claim 1, wherein a thickness ranges from 2.0 $\mu$m to 18.0 $\mu$m.

**7.** The electrolytic copper foil of claim 1, further comprising a protective layer disposed on the copper layer, wherein an anti-corrosive membrane includes at least one among chromium, a silane compound, and a nitrogen compound.

**8.** An electrode for a secondary battery, comprising:

an electrolytic copper foil; and
an active material layer disposed on at least one surface of the electrolytic copper foil,
wherein the electrolytic copper foil includes the electrolytic copper foil according to any one of claims 1 to 7.

**9.** A secondary battery comprising:

a cathode;
an anode;
an electrolyte disposed between the cathode and the anode to provide an environment through which lithium ions move; and
a separator configured to electrically insulate the cathode from the anode,
wherein the anode is made of the electrode for a secondary battery according to claim 8.

**10.** A method of manufacturing an electrolytic copper foil, comprising:

preparing an electrolyte including copper ions and an organic additive; and
forming a copper layer by electrically connecting a cathode plate and a rotating anode drum, which are disposed to be spaced apart from each other in the electrolyte, at a current density, and
the method further includes purifying the organic additive using at least one among carbon filtration, diatomaceous earth filtration, and ozone treatment,
wherein the preparing of the electrolyte includes:

heat-treating a copper wire;
acid-cleaning the heat-treated copper wire;
water-cleaning the acid-cleaned copper wire; and
putting the water-cleaned copper wire into sulfuric acid for the electrolyte,
the electrolyte further includes:

80 to 120 g/L of copper ions;
80 to 150 g/L of sulfuric acid; and
0.01 to 1.5 ppm chloride ions (Cl$^-$),

the organic additive includes a crystalline regulator, and
the crystalline regulator includes an organic compound containing an amino group (-NR$_2$), a carboxyl group (-COOH), and a thiol group (-SH).

**11.** The method of claim 10, wherein the carbon filtration uses at least one of granular carbon and fragmented carbon.

**12.** The method of claim 10, wherein:

the crystalline regulator includes at least one selected from collagen, gelatin, and a decomposition material of the collagen and the gelatin; and
the crystalline regulator has a concentration ranging from 0.5 ppm to 15.0 ppm.

**13.** The method of claim 10, wherein the electrolyte has a concentration of total organic carbon (TOC) at 50 ppm or less.

**14.** The method of claim 10, further comprising forming a protective layer on the copper layer using an anti-corrosive liquid, wherein an anti-corrosive liquid includes at least one among chromium, a silane compound, and a nitrogen compound.

# FIG. 1

# FIG. 2

# FIG. 3

102

MS

120

110

SS

# FIG. 4

103

MS

120

110

130

SS

# FIG. 5

201

MS

210

120
102
110

SS

# FIG. 6

202

MS

210

120

110
103

130

220

SS

# FIG. 7

# FIG. 8

# FIG. 9

# FIG. 10

# FIG. 11

# FIG. 12

# FIG. 13

Europäisches
Patentamt
European
Patent Office
Office européen
des brevets

# EUROPEAN SEARCH REPORT

Application Number

EP 21 19 4955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/277705 A1 (KIM SEUNG MIN [KR] ET AL) 3 September 2020 (2020-09-03) * paragraphs [0027], [0045], [0059]; claims 1,2 * | 1,3,6,7 | INV. C25D1/04 C25D3/38 C25D21/06 C25D21/16 H01M4/00 |
| X | US 9 673 646 B1 (CHENG KUEI-SEN [TW] ET AL) 6 June 2017 (2017-06-06) * claim 1; example 1 * | 1,3,7 | |
| X | US 2020/006777 A1 (KIM SEUNG MIN [KR]) 2 January 2020 (2020-01-02) * claims 1-11; example 5 * | 1,3,6,7 | |
| X | US 2015/030873 A1 (CHENG KUEI-SEN [TW] ET AL) 29 January 2015 (2015-01-29) * paragraph [0059]; claims 1,9; example 1 * | 1,2,6,7 | |
| A | CN 110 760 898 A (JIANGDONG ELECTRONIC MAT CO LTD) 7 February 2020 (2020-02-07) * the whole document * | 1-14 | |

TECHNICAL FIELDS
SEARCHED      (IPC)

C25D
H01M

The present search report has been drawn up for all claims

| Place of search | Date of completion of the search | Examiner |
|---|---|---|
| The Hague | 28 February 2022 | Suárez Ramón, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 19 4955

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2022

| Patent document cited in search report | | Publication date | Patent family member(s) | | Publication date |
|---|---|---|---|---|---|
| US 2020277705 | A1 | 03-09-2020 | CN | 111316486 A | 19-06-2020 |
| | | | EP | 3678241 A2 | 08-07-2020 |
| | | | JP | 2020532653 A | 12-11-2020 |
| | | | KR | 20190025273 A | 11-03-2019 |
| | | | US | 2020277705 A1 | 03-09-2020 |
| | | | WO | 2019045374 A2 | 07-03-2019 |
| US 9673646 | B1 | 06-06-2017 | CN | 107769395 A | 06-03-2018 |
| | | | JP | 6421222 B2 | 07-11-2018 |
| | | | JP | 2018028147 A | 22-02-2018 |
| | | | KR | 20180020927 A | 28-02-2018 |
| | | | TW | 201809302 A | 16-03-2018 |
| | | | US | 9673646 B1 | 06-06-2017 |
| US 2020006777 | A1 | 02-01-2020 | CN | 110495028 A | 22-11-2019 |
| | | | EP | 3588640 A2 | 01-01-2020 |
| | | | JP | 2020508399 A | 19-03-2020 |
| | | | JP | 2021193214 A | 23-12-2021 |
| | | | KR | 20180098875 A | 05-09-2018 |
| | | | US | 2020006777 A1 | 02-01-2020 |
| | | | WO | 2018155972 A2 | 30-08-2018 |
| US 2015030873 | A1 | 29-01-2015 | CN | 104342724 A | 11-02-2015 |
| | | | JP | 5914575 B2 | 11-05-2016 |
| | | | JP | 2015021186 A | 02-02-2015 |
| | | | KR | 20150011751 A | 02-02-2015 |
| | | | MY | 169451 A | 11-04-2019 |
| | | | TW | 201505243 A | 01-02-2015 |
| | | | US | 2015030873 A1 | 29-01-2015 |
| CN 110760898 | A | 07-02-2020 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020200127234